Europäisches Patentamt

European Patent Office

Office européen des brevets

(19)

(11) Numéro de publication : **0 436 409 B1**

(12)

# FASCICULE DE BREVET EUROPEEN

(45) Date de publication du fascicule du brevet :
**13.04.94 Bulletin 94/15**

(51) Int. Cl.⁵ : **C02F 1/78,** C02F 1/72

(21) Numéro de dépôt : **90403199.4**

(22) Date de dépôt : **12.11.90**

(54) Procédé d'ozonation de l'eau avec activation par catalyse hétérogène.

(30) Priorité : **07.12.89 FR 8916175**

(43) Date de publication de la demande :
**10.07.91 Bulletin 91/28**

(45) Mention de la délivrance du brevet :
**13.04.94 Bulletin 94/15**

(84) Etats contractants désignés :
**BE CH DE DK ES GB IT LI NL SE**

(56) Documents cités :
**FR-A- 2 291 687**
**US-A- 4 029 578**
**PATENT ABSTRACTS OF JAPAN, vol. 12, no.**
**433 (C-543), 15 novembre 1988; & JP-A-63 158**
**(NIPPON SHOKUBAI KAGAKU) 01-07-1988**
**IDEM**

(73) Titulaire : **ANJOU RECHERCHE**
**(GROUPEMENT D'INTERET ECONOMIQUE**
**DIT:)**
**52 rue d'Anjou**
**F-75008 Paris (FR)**

(72) Inventeur : **Paillard, Hervé**
**Résidence du Belvédère, 85 Avenue**
**Gambetta**
**F-78400 Chatou (FR)**

(74) Mandataire : **Ballot, Paul Denis Jacques et al**
**Cabinet Ballot-Schmit, 7, rue Le Sueur**
**F-75116 Paris (FR)**

EP 0 436 409 B1

Jouve, 18, rue Saint-Denis, 75001 PARIS

## Description

La présente invention concerne un procédé de traitement des eaux par l'ozone applicable aux eaux à potabiliser et aux eaux résiduaires domestiques et industrielles à épurer. Elle vise à augmenter le pouvoir d'oxydation de l'ozone grâce à une réaction de catalyse hétérogène.

L'utilisation de l'ozone dans le traitement des eaux est un procédé bien connu. Grâce à son potentiel d'oxydo-réduction élevé, l'ozone est employé pour la désinfection et pour dégrader les matières organiques et les éléments minéraux par oxydation.

Cependant, certains composés organiques et certains micro-organismes s'avèrent difficiles à élminer par l'ozone. On est alors amené à utiliser des taux de traitement très élevés avec des temps de contact très importants, ce qui nécessite des installations de très grande taille dont le rendement de traitement reste faible.

De nombreux pesticides, des solvants chlorés sont partiellement ou totalement résistants à une ozonation pour les taux de traitement et les temps de contact pratiqués au stade industriel. De même, le carbone organique lié à la matière organique d'origine naturelle et des eaux usées est très peu éliminé par ozonation seule. Pour augmenter la capacité de dégradation de l'ozone à l'égard de ces composés organiques réfractaires, on utilise également des traitements d'oxydation combinés comme les couplages ozone-péroxyde d'hydrogène ou ozone-rayonnement ultra-violet. Ces traitements augmentent la capacité d'oxydation mais se traduisent, en contre partie, par des consommations supplémentaires en réactifs ou en énergie.

Il a également été montré que certains catalyseurs métalliques permettaient d'accroître l'efficacité d'un traitement d'ozonation.

Des catalyseurs à base de sels métalliques solubles ou insolubles dans l'eau ont été utilisés seuls avec l'ozone. On a préconisé des sulfures métalliques, des sels de Nickel, de cobalt, de fer ferreux, de titane et de métaux purs comme le cuivre. Ces catalyseurs ne sont pas récupérables ou conduisent à des relargages indésirables d'ions métalliques dans l'eau traitée. (Munter & al, Sov J. water clean techn. 1986, 8, N°1).

D'autres auteurs ont utilisé des catalyseurs hétérogènes (ou insolubles) en présence d'ozone, comme par exemple de l'oxyde de fer déposé ou non sur un support à base de verre, d'alumine ou de silicate (Brevet américain N°4040982). Ont été cités également l'oxyde de nickel, de cuivre, de zinc, de chrome, de cobalt et de vanadium (article du journal russe précité).

On a, par ailleurs, préconisé l'utilisation de catalyseurs hétérogènes mixtes en présence d'ozone. Ces catalyseurs étaient constitués de sels insolubles - un carbonate, sulfate, oxyde, halogéné ou sulfure - d'au moins deux métaux d'un groupe comprenant le cuivre, le cadmium et des métaux du groupe VIII tels que le fer, le cobalt, le nickel, le platine ou le palladium. Ces sels insolubles étaient fixés sur support minéral en alumine ou en silicate, par imprégnation, et peuvent être recyclés (brevet américain N°4029578). Les inconvénients de ces catalyseurs risquent cependant d'être coûteux en préparation pour les applications envisageables en traitement des eaux et de relarguer des métaux lourds après le traitement d'ozonation. Ce dernier point interdit leur mise en oeuvre en traitement des eaux à cause des risques de pollution et de toxicité qu'ils engendrent.

En outre, certains auteurs ont préconisés l'emploi de dioxydes composites mixtes à base de titane en combinaison avec un métal pour la catalyse à haute température et à forte pression d'une oxydation effectuée par de l'oxygène moléculaire de l'ozone et du peroxyde d'hydrogène (Mitsui et al., JP-A-63158189).

Les problèmes majeurs énoncés ci-avant expliquent qu'il n'existe pas à l'heure actuelle, d'installations industrielles de traitement des eaux par ozonation catalytique à des températures inférieures à 100°C.

L'invention a donc pour but essentiel de proposer un procédé d'ozonation catalytique utilisable industriellement et permettant non seulement d'augmenter significativement le pouvoir oxydant de l'ozone à l'égard de la matière organique, des éléments minéraux réducteurs et des microorganismes mais aussi d'éviter des relarguages importants en métaux lourds dans l'eau traitée tout en utilisant des conditions opératoires de pression et de température très accessibles.

Ce procédé entre dans le cadre, rappelé ci-dessus, de la catalyse hétérogène et il est caractérisé en ce que l'on utilise comme catalyseur, insoluble dans le milieu, du dioxyde de titane ($TiO_2$) et en ce que l'on effectue l'ozonation catalytique à température comprise entre 0 et 80°C et à pression inférieure à 2 MPa. Le dioxyde de titane présente en effet l'avantage, par rapport aux autres catalyseurs hétérogènes préconisés jusqu'ici et rappelés ci-avant, de ne pas relarguer de métaux lourds après l'ozonation et donc d'éviter une étape supplémentaire de séparation physique, par exemple par filtration.

Le dioxyde de titane peut être utilisé sous diverses formes, par exemple soit tel quel, à l'état pur soit disposé sur une support minéral, comme par exemple de la céramique ou un support organique comme par exemple un polymère de synthèse. La présentation et la granulométrie du catalyseur sont, bien entendu, fonction de la technologie mise en oeuvre. Par exemple, si l'ozonation est effectuée dans un réacteur à lit fixe, il est avantageux d'utiliser le catalyseur comme élément de garnissage du lit, à la façon d'anneaux Raschig par exemple. Si au contraire on opère l'ozonation en lit fluidisé, on peut utiliser le catalyseur soit pur soit déposé sur un support minéral ou organique, sous forme de micrograins de 30 à 500 microns de diamètre. Le réacteur est bien entendu équipé, si nécessaire, de dispositifs destinés à retenir ces grains dans le milieu, par exemple plancher avec crépines ou plaque perforée et plafond en plaque perforée ou système équivalent. Lorsqu'on opère au contraire avec les micrograins de catalyseur, on prévoit une récupération par flotation ou décantation et cyclonage ou même par filtration sur microtamis des grains à la suite du réacteur d'oxydation puis un recyclage en continu des micrograins dans ce réacteur. Enfin, selon une variante, l'oxyde de titane peut être déposé sur une membrane de micro ou ultrafiltration en céramique, laquelle sert à la fois de support au catalyseur et de moyen de filtration ultérieure de l'eau ozonée.

Selon une autre caractéristique et une variante du procédé de l'invention, on ajoute à l'eau à traiter par ozonation en présente de TiO2, un catalyseur homogène constitué par un sel métallique soluble dans le milieu. On a en effet constaté que l'efficacité de l'oxydation catalytique pouvait être nettement améliorée dans un grand nombre de cas.

Le cation du sel métallique est avantageusement constitué par du fer, mais d'autres ions métalliques peuvent être utilisés tels que le cuivre, l'aluminium, l'argent, le zinc, le nickel, le titane ou encore le manganèse. L'étape d'oxydation catalytique avec l'ozone en présence d'un catalyseur hétérogène insoluble et d'un catalyseur homogène en solution est, de préférence, suivie d'une étape de séparation physique de l'ion en solution. Cette étape consiste, de préférence, en une coagulation de l'ion en hydroxyde métallique suivie d'une filtration sur matériau granulaire ou sur membrane filtrante.

La réaction d'ozonation catalytique selon l'invention a lieu à température de 0 à 80°C et sous faible pression, de 0 à 2 MPa (MégaPascals)

Les conditions d'ozonation et les quantités de catalyseur à mettre en oeuvre, sont évidemment fonction de la concentration du ou des composés à oxyder, du rendement d'élimination recherché et du temps de contact dans le réacteur d'ozonation. En pratique, le taux d'ozonation est, en général, compris entre 0,5 et 10 mg de 03/1. La quantité de TiO2 utilisée en recirculation varie avantageusement entre 0,1 et 15 g/l d'eau à traiter et, lorsqu'un catalyseur soluble ou homogène est employé simultanément au catalyseur homogène, sa concentration est comprise de préférence entre 0,1 et 25 mg/l (exprimés en ion métallique).

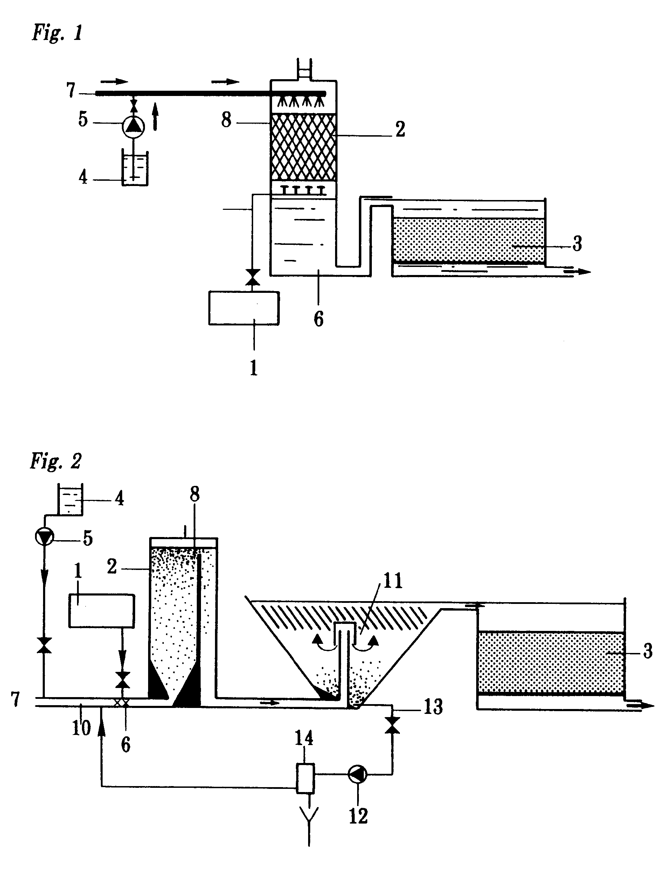

Le procédé selon l'invention peut être mis en oeuvre selon diverses technologies qui ne font pas directement partie des caractéristiques inventives. A titre d'illustration seulement on décrira ci-dessous deux formes de réalisation d'installations d'ozonation en se référant aux figures 1 et 2 annexées.

Comme représenté sur la figure 1, l'eau contenant de la matière organique ou/et des éléments minéraux réducteurs et/ou des microorganismes à dégrader est introduite par la conduite (7) en haut de la tour d'oxydation catalytique (8). L'ozone gazeux produit sur site par l'ozoneur (1) est injecté à la base du garnissage (2) par un système de diffusion composé de préférence de gaines perforées en Inox ou de plateaux poreux en céramique (9). La réaction catalytique d'oxydation a lieu au sein du garnissage (2) en TiO2 au travers duquel ruisselle l'eau à traiter. L'immersion du système de diffusion d'ozone gazeux dans le bassin de contact (6) situé au pied de la tour de contact (8), permet, en cas de nécessité pour la désinfection, d'appliquer une concentration en ozone résiduelle telle que la valeur du C.T (concentration en ozone dissous multipliée par le temps de contact soit au moins égal à 1,6mg.mn.1-1. Pour augmenter encore le pouvoir d'oxydation du procédé, un catalyseur soluble peut être injecté par la pompe doseuse (5) dans la canalisation d'eau à traiter (7) à partir de la capacité de stockage du réactif (4). Dans le cas de l'utilisation d'un catalyseur soluble ou d'un catalyseur hétérogène autre que le dioxyde de titane, la tour d'oxydation (8) est suivie, de préférence d'une étape de filtration (3) sur filtre granulaire ou sur membrane filtrante.

dans l'exemple, de l'installation représentée figure 2, le matériau catalyseur se présente sous forme de micro-grains de 30 à 500 microns de diamètre, mis en contact avec l'eau ozonée dans le réacteur d'oxydation (8) suivant le mode du lit fluidisé. L'eau à traiter est introduite par la conduite (7) au bas du réacteur d'oxydation (8). Elle traverse au préalable un système d'injection et de mélange en conduite (6) permettant l'injection au même point de l'ozone gazeux (9) produit par l'ozoneur (1) et son mélange intime avec le matériau catalyseur introduit en amont (10). La réaction catalytique d'oxydation a lieu au sein du lit fluidisé (2). Après l'étape d'oxydation, le matériau catalyseur est séparé de l'eau traitée dans un décanteur (11). La boue de micro-grains extraite en (13) par la pompe (12) est concentrée dans le système (14), qui est de préférence un hydrocyclone. Le matériau catalyseur, en suspension dans une solution concentrée, est ensuite recyclé en amont du système (6) qui est de préférence un mélangeur statique en conduite. Dans le cas de l'utilisation d'un catalyseur soluble, injecté par la pompe doseuse (5), simultanément à l'emploi du catalyseur hétérogène en micro-grains, le décanteur (11) est suivi, de préférence d'une étape de filtration (3).

L'efficacité du procédé de la présente invention dans le cas de l'élimination d'un pesticide d'une part et dans le cas de l'élimination de matière organique d'origine naturelle d'autre part, est mise en évidence dans les exemples expérimentaux suivants.

## EXEMPLE 1

Une eau de rivière floculée et décantée contenant 2mg/l en carbone organique total et 2,5 µg/l en atrazine a été traitée dans un réacteur de 8 litres à lit fluidisé selon une installation du type figure 2. Le catalyseur utilisé était le dioxyde de titane en micrograins de 50 µm.

L'air ozoné injecté au bas de la colonne d'ozonation présentait une concentration de 15 g d'ozone/m3 d'air.

Les expérimentations suivantes ont été conduites (résultats sur le tableau 1) :

A Un traitement classique à l'ozone

B Un traitement suivant l'invention avec addition de 200mg/l de dioxyde de titane avant ozonation de l'eau.

C Un traitement avec injection de 200 mg/l de dioxyde de titane seul sous aération, sans ozone dans l'air injecté.

D Un traitement suivant l'invention avec addition de 200mg/l de dioxyde de titane avant ozonation d'une eau reconstituée, de même matrice minérale que celle de l'eau de rivière mais sans matières organiques autres que l'atrazine dont la concentration était ajustée à 2,5 µg/l.

E Un traitement selon l'invention dans les même conditions que celles de l'essai D mais avec ajout de 10 mg/l d'ions Fe dissous dans l'eau.

Les rendements d'oxydation de l'atrazine, déjà très bons avec l'oxyde de titane, sont encore améliorés par ajout d'un catalyseur soluble. Au cours d'autres expérimentations le catalyseur a été réutilisé plusieurs fois et son activité n'en a pas été affectée.

## EXEMPLE 2

Une eau dont la composition en matières minérales est similaire à celle de l'eau de Seine et présentant une teneur élevée en carbone organique total (COT = 5mg C/l) d'origine naturelle, a été traitée dans un réacteur d'ozonation catalytique à lit fluidisé (type figure 2) puis a été filtrée sur un filtre à sable (0,8 - 1,2 mm en granulométrie et 6m/h de vitesse de filtration) au sein duquel une biomasse active a été préalablement installée par filtration d'eau de Seine pendant plus d'un mois.

Les expérimentations suivantes ont été conduites :

A Un traitement classique à l'ozone suivi d'une filtration biologique sur sable.

B Un traitement suivant l'invention avec addition de 5g/l de dioxyde de titane en micro-grains de 50 µm avant ozonation puis filtration biologique sur sable.

C Un traitement d'ozonation avec addition de 3,6 g/l d'oxyde de nickel en micrograins de 50 µm avant ozonation, puis filtration biologique sur sable. Les résultats sont résumés sur le tableau 2 ci-après :

Comme on peut le voir, la présence d'un catalyseur hétérogène permet d'augmenter nettement l'abattement du COT par ozonation mais aussi d'accroître son élimination par filtration biologique sur sable. Le catalyseur hétérogène NiO, que l'on peut considérer comme connu en soi, donne certes des résultats équivalents à ceux obtenus avec le TiO2 selon l'invention, mais ce traitement exige une étape supplémentaire de coagulation puis filtration pour retenir les ions métalliques relargués (Ni).

EP 0 436 409 B1

## TABLEAU N°1

| Traitement appliqué | Concentration en Catalyseur dans le réacteur (mg/l) | Taux d'ozonation mgO3/l | Rendement d'abattement de l'atrazine en % | Résiduel en Ti 4+ après oxydation µg/l |
|---|---|---|---|---|
| A : O3 seul | 0 | 2,9 | 47 | – |
| B : O3+TiO2 | 200 | 3,0 | 82 | <5 |
| C : TiO2 seul | 200 | 0 | 6 | <5 |
| D : O3 + TiO2 | 200 | 2,2 | 90 | <5 |
| E : O3 + TiO2 + Fe | 200 | 2,0 | 96 | <5 |

## TABLEAU N°2

| Traitement appliqué | Taux d'ozonation mg/l | Concentration initiale dans l'eau brute COT mg C/L | Rendement d'abattement après oxydation % sur le COT | Rendement d'abattement après l'étape de filtration biologique % sur le COT | Résiduel en Ti4+ ou Ni2+ après oxydation µg/l |
|---|---|---|---|---|---|
| A : ozone | 3,3 | 5 | 18,5 | 26 | – |
| B : ozone + TiO2 | 3,2 | 5 | 46 | 76 | <5 |
| C : ozone + NiO | 3,3 | 5 | 50 | 75 | 80 |

**Revendications**

1. Procédé de purification des eaux par l'ozone, du type selon lequel l'ozonation est activée par mise en contact de l'eau ozonée avec un catalyseur hétérogène, non soluble dans le milieu, caractérisé en ce que l'on utilise comme catalyseur du dioxyde de titane et en ce que l'on effectue l'ozonation catalytique à température comprise entre 0 et 80°C et à pression inférieure à 2 MPa (MegaPascals).

2. Procédé selon la revendication 1, caractérisé en ce que le dioxyde de titane est mis en oeuvre, soit pur, soit déposé sur un support minéral ou organique, comme élément de garnissage dans un réacteur d'ozonation à lit fixe.

3. Procédé selon la revendication 1, caractérisé en ce que le dioxyde de titane est mis en oeuvre dans un réacteur d'ozonation à lit fluidisé sous la forme de particules de 30 à 500 microns, soit pures, soit déposées sur un support minéral ou organique avec, dans ce cas, possibilité de recyclage dans le réacteur où l'eau est traitée dans le sens ascendant ou descendant.

4. Procédé selon la revendication 3, caractérisé en ce que le dioxyde de titane est déposé sur une membrane de micro ou ultra-fixation en céramique servant à la fois de support au catalyseur et de moyen de filtration ultérieure de l'eau ozonée.

5. Procédé selon l'une quelconque des revendications 1 à 4 caractérisé en ce que l'on ajoute, en outre, à l'eau à traiter, un catalyseur homogène constitué par un sel métallique soluble dont le cation est choisi dans le groupe constitué par : fer, cuivre, manganèse, nickel, zinc, argent, aluminium, titane.

6. Procédé selon l'une quelconque des revendications 1 à 4, caractérisé en ce que le taux d'ozonation est de 0,5 à 10mg de $O^3/1$ dans un réacteur approprié et la quantité de $TiO^2$ utilisée est de 0,1 à 15 g/l d'eau à traiter, dans le cas d'une recirculation du catalyseur, et jusqu'à 500 g par litre de réacteur sans recirculation du catalyseur.

7. Procédé selon la revendication 5, caractérisé en ce que la concentration en ion métallique, lorsqu'un catalyseur homogène est, en outre, utilisé, est comprise entre 0,1 et 25 mg/l.

8. Procédé selon l'une quelconque des revendications 1 à 7 caractérisé en ce que l'ozonation est effectuée dans un réacteur à lit fluidisé de catalyseur hétérogène et éventuellement de catalyseur homogène, l'ozone gazeux et le catalyseur recyclé dans le réacteur, après traitement physique, étant injectés dans la conduite d'arrivée d'eau à traiter juste en amont d'un mélangeur statique ou d'un émulseur favorisant un contact intime entre l'eau à traiter, l'ozone et le catalyseur.

**Patentansprüche**

1. Verfahren zum Reinigen von Wasser durch Ozon, bei welchem die Ozonisierung aktiviert wird, indem das ozonisierte Wasser mit einem in diesem Milieu nicht lösbaren heterogenen Katalysator in Kontakt gebracht wird, dadurch gekennzeichnet, daß man als Katalysator Titandioxid verwendet und daß man die katalytische Ozonisierung bei einer Temperatur zwischen 0 und 80°C und einem Druck unterhalb von 2MPa (MegaPascal) durchführt.

2. Verfahren nach Anspruch 1, dadurch gekennzeichnet, daß das Titandioxid entweder rein oder auf einem mineralischen oder organischen Trägermaterial abgelagert, als Auskleidungselement in einem Ozonisierungsreaktor mit festem Bett eingesetzt wird.

3. Verfahren nach Anspruch 1, dadurch gekennzeichnet, daß das Titandioxid in einem Ozonisierungsreaktor mit fluidisiertem Bett in Form von Teilchen mit 30 bis 500 Mikron entweder rein oder auf einem mineralischen oder organischen Trägermaterial abgelagert, mit der in diesem Falle bestehenden Möglichkeit der Recyclebarkeit in dem Reaktor eingesetzt wird, in welchem das Wasser im aufsteigenden oder absteigenden Sinne behandelt wird.

4. Verfahren nach Anspruch 3, dadurch gekennzeichnet, daß das Titandioxid auf einer Mikro- oder Ultrafiltrationsmembran aus Keramik abgelagert ist, die gleichzeitig als Katalysatorträger und Mittel für die spätere Filtration des ozonisierten Wassers dient.

5. Verfahren nach einem der Ansprüche 1 bis 4, dadurch gekennzeichnet, daß man außerdem dem zu behandelnden Wasser einen homogenen Katalysator beifügt, der aus einem löslichen Metallsalz gebildet ist, bei welchem das Kation ausgewählt ist aus der Gruppe, die gebildet ist aus: Eisen, Kupfer, Magnesium, Nickel, Zink, Silber, Aluminium, Titan.

6. Verfahren nach einem der Ansprüche 1 bis 4, dadurch gekennzeichnet, daß die Ozonisierungsquote zwischen 0,5 bis 10mg $O^3$/l in einem geeigneten Reaktor beträgt und die verwendete Menge an $TiO^2$ zwischen 0,1 bis 15g/l des zu behandelnden Wassers liegt, im Falle der Rezirkulation des Katalysators und bis zu 500g pro Liter in einem Reaktor ohne Rezirkulation des Katalysators.

7. Verfahren nach Anspruch 5, dadurch gekennzeichnet, daß die Konzentration der Metallionen zwischen 0,1 und 25mg/l beträgt, wenn ein homogener Katalysator zusätzlich verwendet wird.

8. Verfahren nach einem der Ansprüche 1 bis 7, dadurch gekennzeichnet, daß die Ozonisierung in einem Reaktor mit fluidisiertem heterogenen Katalysatorbett und gegebenenfalls mit homogenem Katalysatorbett durchgeführt wird, wobei das gasförmige Ozon und der recyclte Katalysator nach einer physikalischen Behandlung in die Zuführungsleitung des zu behandelnden Wassers unmittelbar oberhalb eines statischen Mischers oder einer Emulsionsvorrichtung eingeführt wird, wodurch ein enger Kontakt zwischen dem zu behandelndem Wasser, dem Ozon und dem Katalysator herbeigeführt wird.


## Claims

1. Process for purifying water using ozone, of a type according to which ozonisation is activated by bringing water containing ozone into contact with a heterogeneous catalyst which is not soluble in the medium, characterised in that titanium dioxide is used as a catalyst and in that the catalytic ozonisation is carried out at a temperature between 0 and 80°C and at a pressure below 2 MPa (megapascals).

2. Process according to Claim 1, characterised in that the titanium dioxide is used, either in a pure state, or deposited on a mineral or organic carrier, as a lining component in a fixed-bed ozonisation reactor.

3. Process according to Claim 1, characterised in that the titanium dioxide is used in a fluidised-bed ozonisation reactor in the form of particles of 30 to 500 microns, either pure, or deposited on a mineral or organic carrier with, in this case, the possibility of being recycled in the reactor where water is treated in an ascending or descending direction.

4. Process according to Claim 3, characterised in that the titanium dioxide is deposited on a micro- or ultra-fixation membrane made of ceramic material and serving both as a carrier for the catalyst and as a means of subsequent filtration of the ozone-containing water.

5. Process according to any one of Claims 1 to 4, characterised in that, in addition, a homogeneous catalyst containing a soluble metallic salt, the cation of which is chosen from the group comprising iron, copper, manganese, nickel, zinc, silver, aluminium and titanium, is added to the water to be treated.

6. Process according to any one of Claims 1 to 4, characterised in that the ozonisation rate is 0.5 to 10 mg of $O_3$/l in a suitable reactor and the quantity of $TiO_2$ used is from 0.1 to 15 g/l of water to be treated, where the catalyst is recirculated, and up to 500 g per litre in a reactor without recirculation of the catalyst.

7. Process according to Claim 5, characterised in that the concentration of metal ions, when a homogenous catalyst is used in addition, is between 0.1 and 25 mg/l.

8. Process according to any one of Claims 1 to 7, characterised in that ozonisation is carried out in a heterogeneous-catalyst and optionally a homogeneous-catalyst fluidised-bed reactor, the gaseous ozone and the recycled catalyst in the reactor, after physical treatment, being injected into the inlet pipe for water to be treated just upstream of a static mixer or of an emulsifier facilitating close contact between the water to be treated, the ozone and the catalyst.

*Fig. 1*

*Fig. 2*